Europäisches Patentamt

(19) European Patent Office

Office européen des brevets

(11) Publication number: 0 141 374
A2

# (12) EUROPEAN PATENT APPLICATION

(21) Application number: 84112814.3

(22) Date of filing: 24.10.84

(51) Int. Cl.⁴: **A 01 N 25/10**
A 01 N 25/26, A 01 C 1/06

(30) Priority: 25.10.83 US 545676

(43) Date of publication of application:
15.05.85 Bulletin 85/20

(84) Designated Contracting States:
AT BE CH DE FR GB LI LU NL SE

(71) Applicant: PLANT GENETICS, INC.
1930 Fifth Street, Suite A
Davis, CA 95616(US)

(72) Inventor: Redenbaugh, M. Keith
2816 Ganges Avenue
Davis, Cal. 95616(US)

(72) Inventor: Meisen, Charles E.
1019 Chestnut Lane
Davis, Cal. 95616(US)

(74) Representative: Reinländer & Bernhardt Patentanwälte
Orthstrasse 12
D-8000 München 60(DE)

(54) Capsule production using biologically active substrates.

(57) Methods and materials are provided for encapsulating biological material, primarily plant tissue, wherein the materials used to form the capsule or to modify its physical properties are also capable of affecting the encapsulated biological material.

EP 0 141 374 A2

## Description
## Capsule Production Using Biologically Active Substrates

### Technical Field

This invention relates to the production of capsules. More particularly, this invention relates to the production of gel capsules using active reagents.

### Background of the Invention

The known techniques of capsule formation use inert components for capsule structure. Such components are chosen to be biologically inactive to avoid interaction of the capsule matrix with any living material. Such methods are well known and described in the literature. See, e.g., L. Lachman, H.A. Lieberman and J.L. Kanig, eds., "The Theory and Practice of Industrial Pharmacy," Lea and Febiger, Philadelphia, PA, 1970, p. 147-225) and T.J. Roseman and S.Z. Mansdorf, eds., "Controlled Release Delivery Systems" (Marcel Dekker, Inc., N.Y. 1983).

The conventional means for delivery of biologically active substrates useful for plant tissue, microorganisms, or other active substances involve applying the substrates separate from the living tissue. This application can be before or after the living tissue is placed in the field or greenhouse bed, or by applying the substrate at the same time as the living tissue. Conventional application methods are well known and described in the literature. See, e.g., J. Janick, R.W. Schery, F.W. Woods, V.W. Ruttan, "Plant Science," (W.H. Freeman, San Francisco, 1974); and "Western Fertilizer Handbook, (Institute Printers and Publishers, Danville, Ill., 1975).

A limitation to the application of biologically active substances and living tissues is that separate applications have to be made or that the two components are not applied as one unit.

It has been suggested that this limitation may be overcome by placing a dry coating containing the biologically active components around the living tissue. See, e.g., T.V. Suslow and M.W. Schroth (Phytopathology, 72: 199, 1982).

A drawback to this process is that only a small amount of the biologically active component can be placed around the living tissue. An additional limitation is that the dry coating process requires extensive drying of both the biologically active substrate and living tissue. This drying process causes reduction in viability and effectiveness of both biologically active agents and living tissues.

In U. S. Patent Number 4,401,456 a herbicide is mixed with alginate to obtain a uniform distribution of the herbicide when the alginate is gelled. The complexing agents disclosed for use to form the gel matrix can be any of the chlorides of calcium, barium and copper.

A limitation to this process is that inert substances are used to form the capsules. Such substances increase the overall weight and volume of the capsule without providing any biologically active benefit.

Thus, an object of this invention is to provide a technique whereby capsules are formulated using substrates having biological activity.

Another object of the invention is to decrease the weight and volume of inert components in a capsule.

Yet another object of this invention is to decrease the total cost required for capsule formation and delivery of biologically active substrates and living tissue.

A further object of the invention is that the biologically active components will be released in a controlled fashion.

A still further object of the invention is that the biologically active components may express activity on the living tissue while still inside the intact capsule.

An additional object of the invention is to provide a self-contained, potent capsule for timely and precise delivery of biologically active agents and living tissue.

## Disclosure of Invention

In accordance with the invention, methods and capsules are provided for encapsulating biological material comprising gel agents capable of forming a gel matrix which have been complexed by bioactive complexing agents. Also provided are methods and capsules for encapsulating biological material comprising gel agents together with bioactive agents which modify the properties of the gel matrix complexed with complexing agents. The complexing agents therein may or may not be bioactive substances.

## Best Mode For Carrying Out The Invention

Briefly, in accordance with the invention, capsule production containing living tissue is effected by using biologically active components to make such capsules. These components can be integral parts of the gel matrix, or agents which modify the properties of the gel capsule.

This invention is based in part on the recognition that specific compounds that have biologically active effects can be used to make hydrogel capsules using certain polymers. Biologically active components will affect encapsulated biological material when bound in a capsule and will be released from the capsule at an appropriate time.

This invention, further, is based on the recognition that hydrogel capsules can be used as a delivery mechanism for biological material or living tissue to specific environments. This invention is particularly advantageous in that living tissue can respond to the biologically active components under specified environments to insure rapid and efficient establishment of said living tissue.

Selection of Hydrogels

Individual capsule particles may be produced from a variety of hydrogel polymers. Such gels should form capsules when combined with appropriate complexing agents, such agents having biological activity. In general, if biological material is encapsulated therein, a gel must allow microorganism or meristem respiration by permitting difusion of gases. The gel should provide an environment strong enough to resist external abrasion and adverse forces, yet pliable enough to allow the growth and exit of the living tissue at the appropriate time. It may be desirable to use various gels in combination, either as a mixture or in layers, to achieve the desired results.

Gels which have been found useful for encapsulating living tissues and biologically active components include sodium alginate, guar gum, carrageenan with locust bean gum, sodium alginate with gelatin, carboxymethylcellulose, gum tragacanth, sodium pectate and vinyl acetate. Other suitable gels include, but are not limited to:

TABLE 1. GEL AGENTS

I.  Natural Polymers

    A.  Ionic bonds (requires complexing agents)

       Alginate with Gelatin

       Sodium Pectate

       Furcellaran

       Pectin

       Hypnean

       Dextran

       Tamarind

       Guar Gum

    B.  Hydrophobic Interactions

       Amylose

       Agar

       Agarose

       Agar with Gelatin

       Gelatin

       Starch

       Amylopectin

       Cornhull Gum

       Starch Arabogalactan

       Gum Ghatti

       Gum Karagan

       Ti Gum

       Gum Tragacanth

       Wheat Gum

       Chitin

       Dextrin

II.  Chemically Modified Natural Polymers

    A.  Ionic bonds (requires a complexing agent)

       Ethyl Succinylated Cellulose

       Succinylated Zein

       Carboxymethylcellulose

    B.  Hydrophobic Interactions

       Methylcellulose

       Hydroxyethyl Cellulose

C.   Covalent Bonds
     Gelatin with Glutaraldehyde
III. Synthetic Polymers
     A.   Covalent Bonds
          Polyacrylamide
     B.   Hydrophobic Interactions
          Polyethylene Glycol
          Polyvinylpyrrolidone
          Polyoxyethylene
          Hydrophilic Urethane
          Polyvinylacetate
          Vinyl Resins
          Hydron (hydroxyethylmethacrylate)
          2-methyl-5-vinylpyridine-
             methylacrylate-methacrylic acid
     C.   Ionic Bonds
          Sodium poly (styrene sulfonate) with
             poly(vinyl methyl pyridinium) chloride
          Sodium poly (styrene sulfonate) with poly
             (vinyl benzyl trimethyl ammonium) chloride
          Strongly acidic polyanion with strongly basic
             polycation
          Bordon Poly Co. 2113® (vinyl acetato
             homopolymer) (Bordon Co.)
          Gelvatol® (polyvinyl alcohol resin)(Monsanto)
IV.  Stabilizing Compounds
     A.   Trade Names
          Super Slurper® (USDA, SEA-AR,
             Nor. Reg. Res. Lab)
          Viterra® (Union Carbide)
          Laponite® (Laporte (United States) Inc.)
          Gelrite® (Kelco)
          SeaKem® (FMC Corporation)
          SeaPlaque® (FMC Corporation)
          SeaPrep® (FMC Corporation)
          IsoGel® (FMC Corporation)

B.    Organic Compounds

Methylan Clear Wallpaper Paste

Lactose

Wax

Protein Colloids

C.    Inorganic Compounds

1.    Clay

2.    Compounds that adhere by means
of a water-soluble plastic
such as methylcel:

Fly Ash

Feldspar

Celrite

Bentonite

Vermiculite

Diatomaceous Earth

Lime

Calcium Carbonate

3.    Other

Calcium Oxide

Magnesium Carbonate

Sodium Bicarbonate

Urea

Selection of Biologically Active Substrates

Individual capsule particles may be produced when specified hydrogel polymers are complexed in solutions of biologically active substrates.

A sodium alginate solution, for example, will form a gel when a complexing agent is added. Calcium chloride ($CaCl_2$) is generally used, however, lanthanum chloride, ferric chloride, cobaltous chloride and calcium hydroxide are also acceptable; however these agents possess little biological activity. Calcium nitrate and superphosphate fertilizers and many pesticides such as benefin, alachlor and chlorpropham are other acceptable complexing agents, as are other compounds generally with multivalent cations. These latter complexing agents are also biologically active in stimulating and controlling plant growth.

A chosen gel will have a range of concentrations usable in working the invention. A concentration should be chosen to optimize ease of handling, gelling time, strength of gel and coating thickness around the meristematic tissue. If the gel is too dilute, the tissue may settle during gel formation and produce an uneven encapsulation.

The sodium alginate may be prepared in a concentration of 1 to 10% w(in grams)/v(in milliliters) in water, more usually 2 to 10% and ideally from 3 to 5%.

Specific adjuvants and living tissue to be encapsulated may be mixed with the sodium alginate at concentrations specific for the application rates of the particular adjuvants. The dispersed adjuvants in gel solution may then be added dropwise to the complexing agent. Alternatively,the gel solution and complexing agent may be mixed by any of numerous techniques known to the art. These may include droplet formation and agent addition as a one step process by a vibrating nozzle which ejects a gel droplet from one source and coats the droplet with complexing agent from another.

The calcium nitrate (or other complexing agent) may be made up in solution at a concentration of 1 to 1,000 millimolar, more usually 20 to 800 millimolar and ideally from 100 to 500 millimolar. Other complexing agents will have different preferred concentration ranges.

The time for gel formation and temperature of the gelling solutions are interrelated parameters, for selected concentrations of gel and complexing agent. The temperature should be chosen in the range of 1 to 50°C, more usually 10 to 40°C and preferably at 20 to 40°C.

Biologically active substrates may be useful for capsule production in ways other than as complexation agents. For example, monovalent salts when added to complexation agents will reduce the amount of syneresis and function to maintain capsule size and integrity. Such salts may also be used to control and impede meristem germination, particularly osmotically active monovalent salts. For example, sodium chloride, at concentrations of 0.1 to 1.0 molar, more usually 0.3 to 0.6 molar, will reduce syneresis while controling germination of tomato seeds inside calcium alginate capsules. This germination control was effective for at least two months when encapsulated tomato seeds with salt are stored in a sealed container. Upon placement in agar water or in soil, the seeds readily and uniformly germinated at rates equal to controls that contained no salt or that were not encapsulated.

As an alternative to tomato, lettuce or petunia can be similarly treated for germination control.

As an alternative, potassium nitrate may replace sodium chloride at the same concentrations. Potassium nitrate has an additional effect on encapsulated seeds, being a fertilizer source of both potassium and nitrogen. Potassium nitrate then serves a three-fold function; minimizes capsule syneresis, controls seed germination, and provides potassium and nitrogen fertilizers.

As a further alternative to germination control, monovalent salts may also be used as a fertilizer source. For example, potassium phosphate at concentrations of 4 to 200 milligrains per 5 milliliters of 3.2% sodium alginate, may be added to gel and serve as both a fertilizer and control agent of syneresis. Alternatively, calcium phosphate, ammonium nitrate and potassium nitrate may be used.

Finally, multiple layers of biologically active components can be created around living tissue.

## Experimental

In order to demonstrate the invention, the following experiments were carried out with a variety of biologically active complexing and capsule forming agents. All quantitites labeled percent (%) are grams per 100 milliliters, unless otherwise indicated.

EXAMPLE A (Biologically Active Complexing Agents)

### 1. Encapsulation with Benefin (Balan)

Alfalfa seeds, Saranac AR Lot number 27-07-765, were encapsulated by mixing the seeds with 3.2% sodium alginate and complexing the capsules by dropping the seeds/alginate into formulated benefin (n-butyl-N-ethyl-α,α,α-trifluoro-2,6-dinitro-p-toluidine). Solid flat, hard capsules were recovered.

### 2. Encapsulation with Alachlor (Lasso)

As an alternative complexing agent, formulated alachlor (2-chloro-2,6-diethyl-N-(methyoxymethyl) acetanilide) can be substituted for benefin as a complexing agent for sodium alginate as described in protocol A.1.

### 3. Encapsulation with Chlorpropham (Furloe)

As an alternative complexing agent, formulated chlorpropham (isopropyl m-chlorocarbinilate) can be substituted for benefin as described in protocl A.1

4. Encapsulation with Superphosphate

As an alternative complexing agent, superphosphate fertilizer in concentrations of 50-400 milligrams per 20 milliliters of water may be substituted for benefin as in protocol A.1.

5. Encapsulation with Calcium Nitrate

As an alternative complexing agent, calcium nitrate fertilizer in concentrations of 100 to 10,000 millimolar (solution in water) may be substituted for benefin as in protocol A.1.

EXAMPLE B (Control of Capsule Syneresis)
1. Germination Control with Salt

Tomato seeds, UC82, encapsulated in 3.2% sodium alginate and 100 millimolar calcium chloride can be stored in sealed containers without seed germination for up to two months at ambient temperatures when 0.3 to 0.5 molar sodium chloride is added to the sodium alginate mixture before gelation. The encapsulated seeds germinated as rapidly and uniformly as controls when placed on agar water or in soil. Capsule syneresis was reduced by 50% over the controls.

1.a. As an alternative to sodium chloride, potassium nitrate can be encapsualted with sodium alginate and seeds at concentrations of .30 to .50 molar.

1.b. As an alternative seed material, lettuce (Seagreen) or petunia (Northrup King confetti multiflora dwarf color mixture) can be encapsulated with germination control and syneresis reduction.

2. Fertilizer Supply

Tomato seeds were encapsulated as described in protocol B.1 with the exception that potassium phosphate was added as a fertilizer to the alginate mix at concentrations of 4 to 200 milligrams per 5 milliliters of sodium alginate Tomato seed germination rates are comparable to those of the controls.

2.a. As an alternative to potassium phosphate, calcium phosphate at concentrations of 5 to 200 milligrams may be added to the alginate mix as a fertilizer.

2.b. As an alternative to potassium phosphate, ammonium nitrate at concentrations of 50 to 2000 milligrams may be added to the alginate mix as a fertilizer.

2.c. As an alternative to potassium phosphate, potassium nitrate at concentrations of 300 to 500 millimolar may be added to the alginate mix as a fertilizer.

EXAMPLE C (Double-Layer Capsules)

1. Calcium Alginate Beads

Calcium alginate beads, made by dropping 3.2% sodium alginate into 100 millimolar calcium chloride, were remixed with 3.2% sodium alginate and dropped into 100 millimolar calcium chloride to produce double layered capsules.

2. Superphosphate Alginate Beads

3.2% sodium alginate was complexed as beads in a .50 to 1.0% solution of superphosphate fertilizer. The hardened beads were resuspended in 3.2% sodium alginate and complexed as double layer beads in 100 millimolar calcium chloride.

2.a. As an alternative complexing agent for the second complexation, benefin may be used.

Although the foregoing invention has been described in some detail by way of illustration and example for purposes of clarity of understanding, it will be obvious that certain changes and modifications may be practiced within the scope of the appended claims.

Claims

1. A bioactive hydrogel capsule for encapsulating biological material comprising at least one gel agent capable of forming a gel matrix, which agent has been contacted by a bioactive complexing agent.

2. A capsule as recited in Claim 1, wherein the gel agent is chosen from the group consisting of sodium alginate, guar gum, carrageenan, locust bean gum, gelatin, carboxymethylcellulose, gum tragacanth, sodium pectate, vinyl acetate and hydrogel agents identified in Table 1.

3. A capsule as recited in Claim 2, wherein the gel agent is alginate.

4. A capsule as recited in Claim 3, wherein the complexing agent is chosen from the group consisting of calcium nitrate, benefin, alachlor, chlorpropham and superphosphate fertilizer.

5. A capsule as recited in Claim 1 further comprising at least one agent capable of reducing capsule syneresis or capable of supplying nutrition to said biological material included within the complexed gel matrix.

6. A capsule as recited in Claim 5 wherein the agent is chosen from the group consisting of sodium chloride and potassium nitrate.

7. A bioactive hydrogel capsule for encapsulating biological material comprising at least one gel agent capable of forming a gel matrix encapsulating biological material, together with an agent capable of reducing capsule syneresis or capable of supplying nutrition to said biological material, which gel agent has been contacted by a complexing agent.

8. A capsule as recited in any one of Claims 1, 5 or 7 further comprising encapsulated biological material included within said capsule.

9. A capsule as recited in Claim 8 wherein the biological material is plant tissue.

10. A method for encapsulating biological material in a hydrogel capsule using bioactive substrates comprising complexing at least one gel agent capable of forming a gel matrix encapsulating biological material, with a bioactive complexing agent, whereby the encapsulated biological material can be affected by the components of the capsule.

11. A method as recited in Claim 10 wherein the gel agent is chosen from the group consisting of sodium alginate, guar gum, carrageenan, locust bean gum, gelatin, carboxymethylcellulose, gum tragacanth, sodium pectate, vinyl acetate and hydrogel agents identified in Table I.

12. A method as recited in Claim 11 wherein said gel agent is alginate.

13. A method as recited in Claim 12 wherein said complexing agent is chosen from the group consisting of calcium nitrate, benefin, alachlor, chlorpropham and superphosphate fertilizer.

14. A method as recited in Claim 10 further comprising including at least one agent capable of reducing capsule syneresis or capable of supplying nutrition to said biological material within the complex gel matrix.

15. A method as recited in Claim 14 wherein the agent is chosen from the group consisting of sodium chloride and potassium nitrate.

16. A method for encapsulating biological material within a hydrogel capsule using bioactive substrates comprising complexing at least one gel agent capable of forming a gel matrix encapsulating biological material, together with an agent capable of reducing capsule syneresis or capable of supplying nutrition to said biological material, whereby the capsule is capable of affecting the encapsulated biological material.